(19) Europäisches Patentamt
European Patent Office
Office européen des brevets

(11) EP 1 205 239 B1

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(51) Int Cl.:
***B01J 13/16*** *(2006.01)* ***B41M 5/165*** *(2006.01)*

(21) Anmeldenummer: **01123238.6**

(22) Anmeldetag: **02.10.2001**

(54) **Mikrokapseln mit Wänden aus Polyharnstoff**
Microcapsules having walls of polyurea
Microcapsules ayant parois de polyurée

(84) Benannte Vertragsstaaten:
**BE DE ES FR GB IT**

(30) Priorität: **16.10.2000 DE 10051190**

(43) Veröffentlichungstag der Anmeldung:
**15.05.2002 Patentblatt 2002/20**

(73) Patentinhaber: **LANXESS Deutschland GmbH**
**51369 Leverkusen (DE)**

(72) Erfinder:
- **Klug, Günter, Dr.**
**40764 Langenfeld (DE)**
- **Weisser, Jürgen, Dr.**
**41542 Dormagen (DE)**

(56) Entgegenhaltungen:
**EP-A- 0 727 251** **EP-A- 0 841 088**
**DE-A- 19 623 566**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 205 239 B1

## Beschreibung

Die vorliegende Erfindung betrifft Mikrokapseln mit Wänden aus Polyharnstoff oder enthaltend Polyharnstoff, der durch Umsetzung von Polyisocyanaten, Guanidinverbindungen und Aminen erhalten wird, Verfahren zur Herstellung dieser Mikrokapseln sowie die aus den Mikrokapseln hergestellten kohlefreien Durchschreibepapiere.

Kohlefreie Durchschreibepapiere enthalten auf ihrer Rückseite eine Schicht Mikrokapseln fixiert. In letzteren befindet sich in Öl gelöst ein sogenannter Farbgeber, der in der Lage ist, in Gegenwart saurer Entwicklungssubstanzen innerhalb weniger Sekunden einen Farbumschlag von farblos nach farbig zu bewirken.

Platziert man nun ein mit Kapseln beschichtetes Papier auf ein mit Entwicklersubstanzen präpariertes Papier in der Weise, dass die Kapseln in direktem Kontakt mit dem Entwickler stehen, so wird auf der Entwicklerseite ein farbiges Schriftbild erzeugt, sobald man das Papier mit Kapseln auf der Rückseite beschreibt und die Kapseln durch den Druck des Schreibgerätes zerplatzen und den Farbgeber freigeben.

Bei einer Variante dieses Verfahrens werden mit Kapseln beschichtete Papiere direkt mit einer Entwicklerschicht nachbeschichtet (sogenanntes Zweischicht self-contained paper) bzw. Kapseln werden direkt mit Entwickler vermischt und auf Papier beschichtet (sogenanntes Einschicht self-contained Papier). Bei diesen - nachfolgend "SC-Papiere" - genannten Papieren kann durch mechanischen Druck direkt auf der beschichteten Seite ein Schriftbild - z.B. durch Auflegen eines Bogens unbeschichteten Papiers und dessen Beschriftung - erzeugt werden.

Kohlefreie Durchschreibepapiere sind weltweit verbreitet, sie unterscheiden sich im wesentlichen nur durch die Art der verwendeten Mikrokapselwand. Üblich sind hier Gelatine-, Melamin-Formaldehyd- und Polyurethan- bzw. Polyharnstoffkapseln. Die Polyhamstoffkapseln werden üblicherweise durch ein Grenzllächenpolyadditionsverfahren gewonnen, dessen Grundzüge nachfolgend skizziert werden.

Im allgemeinen löst man in einem Öl unter Erwärmen einen geeigneten Farbgeber und versetzt diese Mischung mit einem Polyisocyanat. Außerdem bereitet man eine wässrige Lösung eines Schutzkolloids z.B. Polyvinylalkohol, und stellt aus Öl- und Wasserphase mit Hilfe eines Emulgiergerätes eine feinteilige Öl-in-Wasser-Emulsion her, deren Korngröße etwa dem mittleren Durchmesser der gewünschten Kapsel entspricht.

In einem parallelen oder nachfolgenden Verfahrenschritt gibt man zu dieser Emulsion ein in Wasser gelöstes Amin bzw. eine in Wasser gelöste aminähnliche Substanz (nachfolgend als "Vernetzer" bezeichnet). Dieses bewirkt an der Phasengrenze Öl/Wasser eine schnelle Abreaktion von im Öl gelöstem Isocyanat unter Bildung eines dünnen Polyharnstofffilms. Durch Wärmezufuhr und entsprechende Reaktionszeit lässt sich diese Polyaddition nahezu quantitativ durchführen. Diese Vorgehensweise wird als Phasengrenzflächenverfahren bezeichnet. Man erhält schließlich in Wasser dispergierte, Isocyanat-freie Öltropfen, die mit einer elastischen Polyhamstoffwand umgeben sind und als Mikrokapseln bezeichnet werden. Typische, derartige Verfahren und daraus resultierende Kapseln sind beispielsweise in den Patentschriften US-A 5.225.118, US-A 5.164.126, EP-A 780 154, US-A 5.635.211, US-A 5.643.506, EP-A 0 535 384 beschrieben.

Gemäß dem Stand der Technik wird zur Herstellung von Mikrokapseln mit Polyharnstoffwänden nach einem Phasengrenzflächenverfahren eine hydrophobe Ölphase benötigt, die ein Polyisocyanat als primären Wandbildner enthält. Die Dicke der späteren Kapselwand ist direkt proportional zum Anteil des primären Wandbildners, des Polyisocyanates.

Gemäß EP-A-727 251 (≙ US-A-5.635.211) sind bereits Mikrokapseln beschrieben, die unter Verwendung von Guanidinverbindungen-haltigen Vernetzern hergestellt wurden und ein gutes Eigenschaftsprofil aufweisen. Die Stabilität dieser Mikrokapseln sollte nunmehr weiter verbessert werden. Insbesondere beim Einsatz der Mikrokapseln zur Herstellung von Self-Contained Papieren kommen die Mikrokapseln direkt mit dem Entwickler in Kontakt und müssen eine hohe Stabilität, insbesondere Dichtigkeit haben. Anderenfalls kommt es bereits während des Herstellungsverfahrens solcher Papiere zu ungewollter Beschädigung der Kapseln, Austritt des Farbgebers und zur Anfärbung des Papiers.

Diese Aufgabe lag der vorliegenden Erfindung zugrunde.

Gelöst wurde die Aufgabe durch Mikrokapseln, deren Wände aus Umsetzungsprodukten von Polyisocyanaten mit Guanidinverbindungen und Aminen bestehen oder solche Umsetzungsprodukte enthalten, dadurch gekennzeichnet, dass als Polyisocyanate Uretdiongruppen aufweisende Polyisocyanate enthaltend mindestens 70, vorzugsweise mindestens 75 Gew.-% des eingesetzten Isocyanats ausmachen und kann beispielsweise mit der Gel-Permeations-Chromatographie bestimmt.werden der Formel II

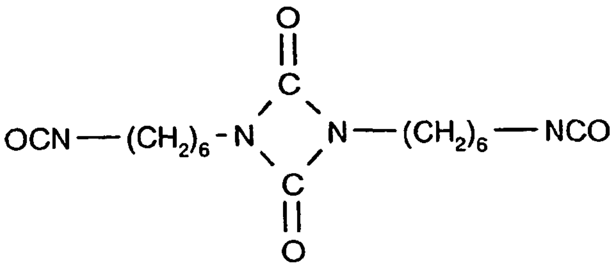

(II)

und höchstens bis zu 30, vorzugsweise höchstens bis zu 25 Gew.-%, auch Verbindungen der Formel

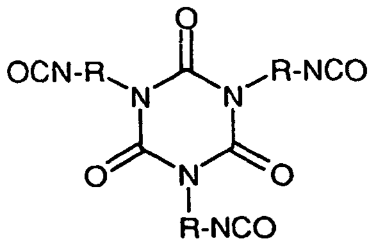

mit R = $(CH_2)_6$
und/oder der Verbindung der Formel (III)

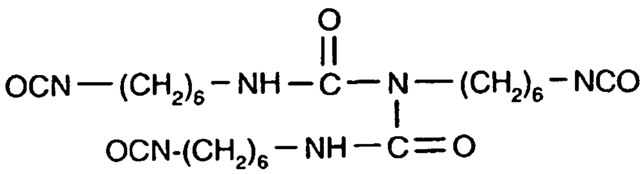

(III)

eingesetzt werden.

Die Guanidinverbindungen und die Amine werden als Vernetzer eingesetzt.

Für die Herstellung erfindungsgemäßer Mikrokapseln kommen als Guanidinverbindungen beispielsweise solche der Formel (I) in Frage in der

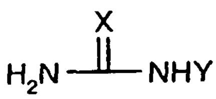

(I),

X

für HN=, 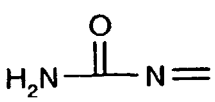 oder 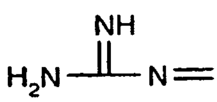

und
Y

für H— . NC— . $H_2N$— . HO— .

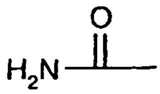 oder 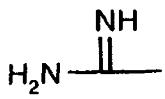

stehen
sowie deren Salze mit Säuren.

Beispielsweise kann es sich bei den Salzen um Salze von Kohlensäure, Salpetersäure, Schwefelsäure, Salzsäure, Kieselsäure, Phosphorsäure, Ameisensäure und/oder Essigsäure handeln. Der Einsatz von Salzen von Guanidinverbindungen der Formel (I) kann in Kombination mit anorganischen Basen erfolgen, um in situ aus den Salzen die freien Guanidinverbindungen der Formel (I) zu erhalten. Als anorganische Basen für diesen Zweck kommen z.B. Alkali- und/oder Erdalkalihydroxide und/oder Erdalkalioxide in Frage. Bevorzugt sind wässrige Lösungen oder Aufschlämmungen dieser Basen, insbesondere wässrige Natronlauge, wässrige Kalilauge und wässrige Lösungen oder Aufschlämmungen von Kalziumhydroxid. Es können auch Kombinationen mehrerer Basen angewendet werden.

Häufig ist es vorteilhaft, die Guanidinverbindungen der Formel (I) als Salze einzusetzen, weil sie in dieser Form im Handel erhältlich und die freien Guanidinverbindungen zum Teil in Wasser schwer löslich oder nicht lagerstabil sind. Wenn man anorganische Basen einsetzt, können diese in stöchiometrischen, unterstöchiometrischen und überstöchiometrischen Mengen, bezogen auf Salze von Guanidinverbindungen, verwendet werden. Vorzugsweise setzt man 10 bis 100 Äquivalent-% anorganische Base (bezogen auf Salze der Guanidinverbindungen) ein. Die Zugabe anorganischer Basen hat zur Folge, dass bei der Mikroverkapselung in der wässrigen Phase Guanidinverbindungen mit freien $NH_2$-Gruppen zur Reaktion mit den in der Ölphase enthaltenden Polyisocyanaten zur Verfügung stehen. Bei der Mikroverkapselung erfolgt die Zugabe von Salzen von Guanidinverbindungen und Basen zweckmäßigerweise so, dass man sie getrennt der wässrigen Phase zufügt.

Vorzugsweise wird Guanidin oder werden Salze von Guanidin mit Kohlensäure, Salpetersäure, Schwefelsäure, Salzsäure, Kieselsäure, Phosphorsäure, Ameisensäure und/oder Essigsäure eingesetzt.

Besonders vorteilhaft ist es, Salze von Guanidinverbindungen mit schwachen Säuren einzusetzen. Diese befinden sich in wässriger Lösung in Folge Hydrolyse im Gleichgewicht mit der entsprechenden freien Guanidinverbindung. Die freie Guanidinverbindung wird während des Verkapselungsprozesses verbraucht und bildet sich gemäß dem Massenwirkungsgesetz laufend nach. Diesen Vorteil zeigt in besonderer Weise das Guanidincarbonat. Beim Einsatz von Salzen von Guanidinverbindungen mit schwachen Säuren ist ein Zusatz anorganischer Basen zur Freisetzung der freien Guanidinverbindungen nicht erforderlich.

Die für die vorliegende Erfindung in Frage kommenden Guanidinverbindungen der Formel (I) können auch durch Ionenaustausch aus ihren wasserlöslichen Salzen nach dem Stand der Technik mit Hilfe handelsüblicher basischer Ionenaustauscher hergestellt werden. Man kann das Eluat aus dem Ionenaustauscher direkt zur Kapselwandbildung heranziehen, indem man es mit der Öl-in-Wasser-Emulsion vermischt. Ganz besonders bevorzugt ist Guanidincarbonat.

Beispielsweise kann man soviel Guanidinverbindung einsetzen, dass pro Mol NCO-Gruppen, die als Polyisocyanat in der Ölphase vorliegen, 0,2 bis 4,0 mol an freien $NH_2$-Gruppen in Form von Guanidinverbindungen in die Wasserphase eingebracht oder dort freigesetzt werden. Vorzugsweise beträgt diese Menge 0,5 bis 1,5 mol. Beim Einsatz von Guanidinverbindungen in unterstöchiometrischer Menge verbleiben nach der Reaktion mit dem Polyisocyanat noch freie NCO-Gruppen. Diese reagieren dann im allgemeinen mit Wasser, was üblicherweise nicht kritisch ist, weil dabei neue, freie, zur Vernetzung fähige Aminogruppen entstehen.

Vorzugsweise werden die Guanidinverbindungen in Form wässriger Lösungen eingesetzt. Die Konzentration solcher Lösungen ist unkritisch und im allgemeinen nur durch die Löslichkeit der Guanidinverbindungen in Wasser begrenzt. Geeignet sind z.B. 1 bis 20 gew.-%ige wässrige Lösungen von Guanidinverbindungen.

Als Amine als zusätzliche Vemetzerkomponente kommen insbesondere Polyamine in Frage. Besonders bevorzugt sind aliphatische und/oder cycloaliphatische Amine, die wenigstens zwei primäre und/oder sekundäre Aminogruppen besitzen.

Der Anteil der Guanidinverbindung, insbesondere der an Guanidincarbonat an der Gesamtvemetzermenge beträgt vorzugsweise 50 Mol-% oder mehr.

Bevorzugte Amine besitzen ein Molekulargewicht von weniger als 200 g/mol. Als besonders bevorzugte Amine sind zu nennen:
Hydrazin, Ethylendiamin, Diethylentriamin, Triethylentetramin, Tetraethylenpentamin, Aminoethylpiperazin, Propylendiamin, N-Methyldipropylentriamin, Bis-(3-aminopropyl) amin, Hexamethylendiamin sowie 2,5-Diamino-2,5-dimethylhexan.

Die molare Gesamtvemetzermenge an Guanidinverbindung und Amin zum Polyisocyanat beträgt vorzugsweise 1,0 bis 1,5 mol-Äquivalente, insbesondere 1,25 bis 1,5 mol-Äquivalente. Dies bedeutet, dass pro NCO-Gruppe vorzugsweise wenigstens eine $NH_2$-Gruppe oder NH-Gruppe zur Verfügung steht, wobei Folgereaktionen nicht berücksichtigt werden.

Werden als Vernetzer Gemische von Guanidinverbindungen und Aminen eingesetzt, so kann deren Gesamt-Gehalt an primären oder sekundären Aminogruppen rechnerisch bzw. analytisch ermittelt und in Relation zu den in der Ölphase vorhandenen NCO-Gruppen gesetzt werden:

Pro Mol NCO-Gruppen, die als Polyisocyanat in der Ölphase vorliegen, können 0,2 bis 4,0 Mol an mit NCO-Gruppen reagierenden Aminogruppen (primär oder sekundär) in die Wasserphase eingebracht werden. Als Grundregel wird definiert, dass eine NCO-Gruppe eine primäre oder eine sekundäre Aminogruppe zur Abreaktion benötigt. Folgereaktionen werden nicht berücksichtigt. Werden Gemische von Guanidinverbindungen mit Aminen eingesetzt, so soll mindestens die Hälfte (50 Mol-%) von den in der Mischung vorhandenen Aminogruppen von den Guanidinverbindungen erbracht werden.

Gelangen technische Polyaminmischungen, z.B. Siedeschnitte, Destillationsrückstände zur Anwendung, so sind diejenigen geeignet, deren analytisch bestimmbare Acetylzahl, ausgedrückt in mg KOH/g Substanz, größer als 500 ist. Bevorzugt sind Diethylentriamin, Triethylentetramin und Tetraethylenpentamin. Besonders bevorzugt ist Diethylentriamin.

Die technischen Uretdion-Isocyanate, die überwiegend das Uretdion des Hexamethylendiisocyanats (Struktur (II)) enthalten, und deren Gemische mit anderen aliphatischen und aromatischen Isocyanaten, lassen sich überraschenderweise bei Vernetzung mit Guanidinverbindungen zu hochwertigeren Mikrokapseln besser verarbeiten als es beim

Einsatz von Isocyanaten mit überwiegenden Strukturantellen von (I) und/oder (III) der Fall ist.

Uretdionstruktur aufweisende Polyisocyanate oder deren Gemische mit anderen aliphatischen und/oder aromatischen Isocyanaten können z.B. in einer Menge von 1 bis 25 Gew.-%, bevorzugt 3 bis 15 Gew.-%, besonders bevorzugt 5 bis 10 Gew.-%, bezogen auf die Gesamtmenge der zu verkapselnden Ölphase, eingesetzt werden.

Bei der technischen Herstellung von Isocyanaten der Formel (III) entstehen u.a. auch höhermolekulare Anteile von Additionsprodukten des Hexamethylendiisocyanats oder Verbindungen mit unterschiedlicher NCO-Verknüpfung. Somit können in untergeordnetem Maße, z.B. bis zu 20 Gew.-%, auch Verbindungen der Formeln

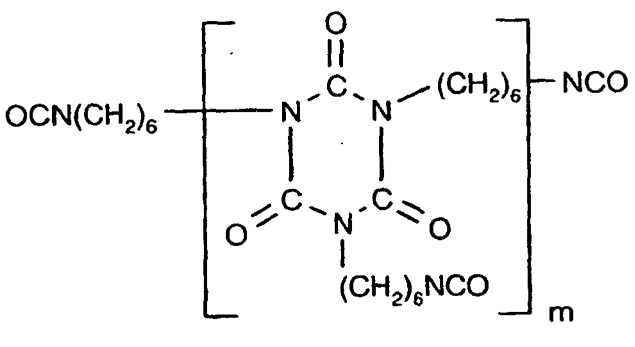

(V)

und/oder

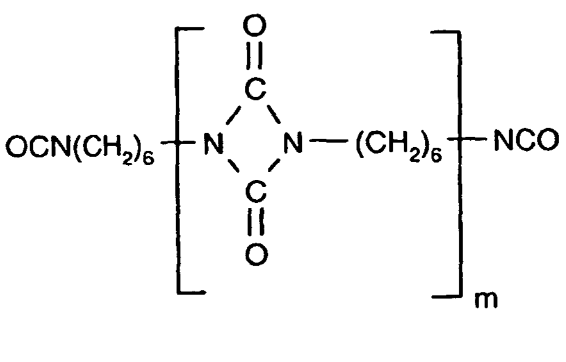

(VI)

in denen m jeweils für eine ganze Zahl im Bereich von 1 bis 10 steht, in den erfindungsgemäß einzusetzenden Mischungen enthalten sein, wie es häufig bei Einsatz handelsüblicher Produkte der Fall ist.

Die erfindungsgemäßen Mikrokapseln können im Inneren, in organischen Lösungsmitteln gelöst, alle diejenigen Farbgeber enthalten, die nach dem Stand der Technik zur Herstellung kohlefreier Durchschreibepapiere im Handel sind und von denen bekannt ist, dass sie mit Isocyanaten nicht reagieren. Dies können beispielsweise Verbindungen vom Typ der Triphenylmethanverbindungen, Diphenylmethanverbindungen, Bisindophthalidverbindungen, Bisarylcarbazolylmethanverbindungen, Xanthenverbindungen, Benzoxazinverbindungen, Thiazinverbindungen und Spiropyranverbindungen sein, insbesondere solche, die als Farbgeber zur Herstellung kohlefreier Durchschreibepapiere bekannt sind. Es können auch Gemische mehrerer Farbgeber eingesetzt werden. Einige einsetzbare Farbgeber sind z.B. beschrieben in EP-A 591 106, EP-A 315 901, EP-A 234 394, DE-A 3 622 262 und EP-A 187 329.

Grundsätzlich sind die erfindungsgemäß hergestellten Mikrokapseln geeignet, eine Vielzahl chemisch unterschiedlicher Verbindungen einzuschließen, sofern diese in organischen Lösungsmitteln löslich sind und nicht mit den verwendeten Isocyanaten bzw. den aminischen Vernetzern sowie Guanidinverbindungen reagieren. Beispiels weise seien genannt: Duftstoffe, Aromen, Klebstoffe, Herbizide, Pestizide, Insektizide, Katalysatoren, Pharmazeutika und andere.

Als organische mit Wasser nicht mischbare und inerte Lösungsmittel, die bei der Herstellung der Mikrokapseln zusammen mit dem zu verkapselten Stoff und dem Polyisocyanat Bestandteil der Ölphase sind, kommen z.B. aromatische, aliphatische und naphthenische Kohlenwasserstoffe, Carbonsäureester, chlorierte Paraffine, Öle tierischer und pflanzlicher Herkunft, natürliche Fette mit Schmelzpunkten im Bereich 10°C bis 35°C, flüssige Fettderivate und über 100°C siedende aromatische und aliphatische Ether in Frage. Es können auch Gemische mehrerer Lösungsmittel eingesetzt werden.

Bei der Herstellung erfindungsgemäßer Mikrokapseln kann die wässrige Phase gegebenenfalls Emulgatoren, Stabilisatoren und/oder die Koaleszenz verhindernde Stoffe enthalten. Emulgatoren kann gegebenenfalls auch die Ölphase enthalten. Die Menge derartiger Zusätze kann z.B. im Bereich 0,5-10 Gew.-%, bezogen auf die jeweilige Phase liegen.

Für die vorliegende Erfindung können beispielsweise Lösungsmittel vom Typ der alkylierten Aromaten, Chlorparaffine, Ester, niedrigschmelzende natürliche Fette und Wachse, natürliche Öle sowie sich von letzteren ableitende Ester mit niedrigen Alkoholen, verwendet werden.

Bevorzugt sind Lösungsmittelgemische aus wenigstens einer Verbindung ausgewählt aus der Gruppe I und wenigstens einer Verbindung aus der Gruppe II.

Unter Lösungsmittel der Gruppe I werden Alkylaromaten, wie Diisopropylnaphthaline, halogenierte Paraffine, wie Chlorparaffin, natürliche Fette und Öle, wie Kokosfett und synthetisch hergestellte aliphatische oder aromatische Ester verstanden.

Unter Lösungsmittel der Gruppe II werden Naphthene (d.h. cycloaliphatische Kohlenwasserstoffe) sowie Isoparaffine verstanden.

Bevorzugt ist der Anteil an Lösungsmittel aus der Gruppe I wenigstens 50 Gew.-%, insbesondere wenigstens 70 Gew.-%, besonders bevorzugt wenigstens 90 Gew.-%, bezogen auf die Gesamtmenge an organischen Lösungsmittel. Die Differenz zu 100% kann jeweils durch ein bzw. mehrere der Lösungsmittel der Gruppe II ausgemacht werden.

Als Beispiele für Lösungsmittel der Gruppe I seien folgende Produktklassen genannt, die jeweils auch in Form ihrer Isomerenmischungen eingesetzt werden können.

Diisopropylnaphthalin wie KMC®113 von Rütgers Kureha Solvents GmbH, Alkylaromaten wie SURESOL® 290 von Koch Chemical Company, oder SURESOL® 300 von Koch Chemical Company, Phenyl-xylyl-ethane wie SAS® 296 von Nippon Soda Co. Ltd., oder PXE von Daio Solvents, Chlorparaffine wie Meflex® DA von Deutsche ICI GmbH, oder Solvocaffaro® von Industrie Chimiche Caffaro S.p.A., oder Kokosfett wie Cocopur® von Walter Rau G.m.b.H..

Als Lösungsmittel der Gruppe II seien folgende Produkte genannt:

Isoparaffine wie Exxsol® D 100, oder NOPPAR®, oder ISOPAR® von Deutsche EXXON CHEMICAL GmbH, oder Isohexadekan von Degussa-Hüls AG, oder Naphthene wie Gravex® 913 von Deutsche Shell AG oder Nytex® 800 und ähnl. Typen von Nynäs Naphthenics AB.

Die Erfindung betrifft weiterhin ein Verfahren zur Herstellung der erfindungsgemäßen Mikrokapseln, das dadurch gekennzeichnet ist, dass man

a) eine Ölphase aus Polyisocyanaten, gegenüber Isocyanaten inertes, mit Wasser nicht mischbares Lösungsmittel, wenigstens einer einzukapselnden Verbindung und gegebenenfalls weiteren Zusätzen und
b) eine Wasserphase aus Wasser, Stabilisatoren und gegebenenfalls weiteren Hilfsstoffen,

vorzugsweise mittels eines Dispergiergerätes, in eine Emulsion überführt, und dazu Guanidinverbindungen und Amine als Vernetzer gibt.

Bevorzugt entspricht dabei die Öltröpfchengröße derjenigen der Mikrokapsel.

Im Rahmen dieser Anmeldung wird unter Stabilisator eine Verbindung verstanden, die in der Lage ist die Koaleszenz der Tröpfchen zu verhindern und die Grenzflächenspannung zwischen Öl- und Wasserphase herabzusetzen. Anstelle einer Verbindung können auch mehrere Verbindungen eingesetzt werden, die jeweils nur eine Funktion übernehmen.

Im Folgenden wird eine allgemeine Herstellungsvariante als Beispiel vorgestellt. Dabei werden zunächst die einzelnen Komponenten beschrieben.

**Lösung A**

Wasser mit einem Zusatz von 0,5 - 10 Gew.-% eines Schutzkolloids. Dieses kann aus teilverseiften Polyvinylacetaten, Polyvinylalkohol, Carboxymethylcellulose und deren Derivaten, Gummi arabicum oder Eiweißhydrolysaten bestehen. Vorzugsweise wird ein teilverseiftes Polyvinylacetat mit einem Verseifungsgrad von etwa 80 % in einer Konzentration von 0,5 bis 2,0 Gew.-% einsetzt. Geeignete Handelsprodukte sind z.B. Airvol® 523 von Air Products Nederland B.V. oder Mowiol® 26 - 88 von Clariant (Deutschland) GmbH.

**Lösung B**

Lösung der einzukapselnden Verbindung bzw. Verbindungen, insbesondere des Farbgebers, in einem mit Wasser nicht mischbaren gegenüber Isocyanaten inertem Lösungsmittel wie beispielsweise Diisopropylnaphthalin (wie KMC® -113 von Rütgers Kureha Solvents GmbH).

Die Konzentration der zu verkapselnden Verbindung, insbesondere des Farbgebers, im Lösungsmittel beträgt vorzugsweise 3 bis 15 Gew.-%, bezogen auf die Lösung, je nach Löslichkeit der Farbstoffe und gewünschter Farbtiefe.

**Komponente C**

Co-Lösungsmittel der Gruppe II, das als Verschnittmittel dient, beispielsweise naphthenische Kohlenwasserstoffe wie GRAVEX® 913 von Deutsche Shell AG oder Nytex® 800 von Nynäs Naphthenics AB oder Isoparaffine wie Exxsol® D 100 von Deutsche EXXON CHEMICAL GmbH. Naphtenische Öle sind besonders geeignet.

**Komponente D**

Hierbei handelt es sich um die erfindungsgemäß verwendeten Polyisocyanate. Bevorzugt ist beispielsweise Hexamethylendiisocyanat-Isocyanurat mit einem NCO-Gehalt von wenigstens 10 Gew.-% und einem Isocyanurat-Anteil von wenigstens 30 Gew.-% wie z.B. BAYMICRON® OXA WM 111 oder Hexamethylendiisocyanat-Biuret mit einem NCO-Gehalt von wenigstens 10 Gew.-% und einem Biuretanteil von bis zu 80 Gew.-% wie beispielsweise BAYMICRON® OXA WM 22 oder Hexamethylendiisocyanat-Uretdion mit einem NCO-Gehalt von wenigstens 15 Gew.-% und einem Uretdionanteil von wenigstens 60 Gew.-% wie beispielsweise BAYMICRON® OXA WM 33 von Bayer AG, Leverkusen.

**Lösung E**

Entsalztes Wasser, in dem die Guanidinverbindung, insbesondere Guanidincarbonat, und Amine, insbesondere aliphatische Polyamine, aufgelöst sind. Bevorzugt wird eine Lösung mit 80 bis 90 Gew.-% Wassergehalt und 20 bis 10 Gew.-% Vernetzergemisch eingesetzt.

Das erfindungsgemäße Verfahren kann sowohl kontinuierlich als auch diskontinuierlich durchgeführt werden.

Bei der diskontinuierlichen Verkapselung geht man vorzugsweise so vor, indem man Komponente D mit einer entsprechenden Menge der Lösung B und gegebenenfalls mit Komponente C vermischt und die nun entstandene Lösung zu einer entsprechenden Menge der Lösung A unter schnellem Rühren hinzufügt, bis eine grobteilige Emulsion entstanden ist. Mittels eines handelsüblichen schnelllaufenden Dispergiergeräts wird dann, vorzugsweise bei Temperaturen unterhalb von 40°C, so lange emulgiert, bis eine feinteilige Emulsion entstanden ist, deren Tröpfchengröße derjenigen der gewünschten Mikrokapsel entspricht.

Hiernach reduziert man die Tourenzahl des Emulgiergeräts und fügt vorzugsweise ebenfalls bei Temperaturen unter 40°C die Lösung E hinzu, wodurch die Bildung der Kapselwand gestartet wird. Die Verkapselungsreaktion wird dann vorzugsweise unter Temperaturerhöhung auf 60 bis 90°C, vorzugsweise bei 70 bis 80°C unter mäßigem Rühren zu Ende geführt.

Es resultiert eine wässrige Dispersion der erfindungsgemäßen Mikrokapseln. Der Kapselanteil kann je nach Menge und Verhältnis der Einsatzstoffe zwischen 30 und 65 Gew.-%, vorzugsweise 45 bis 55 Gew.-% betragen.

Diese Art der diskontinuierlichen Verkapselung entspricht in ihrer Durchführung insofern dem Stand der Technik und erfordert keine besonderen verfahrenstechnischen Maßnahmen.

Bei der kontinuierlichen Verkapselung geht man vorzugsweise so vor, dass die Einsatzlösungen bzw. -komponenten A, B, C und D mittels geeigneter Präzisionspumpen dem Emulgierapparat kontinuierlich zugeführt werden, wobei Lösung B und Komponente D vorzugsweise mittels handelsüblicher statischer oder dynamischer Mischer vorgemischt werden, bevor sie in einem weiteren statischen oder dynamischen Mischers mit Komponente C vereinigt werden. Hierdurch entsteht eine homogene Ölphase, die den in Öl gelösten Farbgeber, das Polyisocyanat sowie gegebenenfalls das Verschnittmittel enthält.

Diese Ölphase wird dann mit der Lösung A vereinigt, gegebenenfalls nochmals vermischt und in den Emulgierapparat eingepumpt. Mittels geeigneter Kühlvorrichtungen kann die dort auftretende Temperaturerhöhung, bedingt durch Scherwirkung, auf ein akzeptables Maß reduziert werden. Vorzugsweise wird die Temperatur so gesteuert, dass im Auslauf des Emulgierapparates eine Temperatur von 25 bis 40°C eingehalten wird. Die austretende, feinteilige Emulsion wird nun kontinuierlich mit Lösung E vereinigt und vermischt, was ebenfalls mit Hilfe von statischen oder dynamischen Mischern bzw. Rührorganen geschehen kann.

Die hiernach beginnende Wandbildung bzw. Verkapselung kann nun wahlweise in einer Kesselkaskade oder in einzelnen Kesseln vervollständigt werden. Dazu wird in einer Kesselkaskade unter Rühren die Temperatur stufenweise auf bis zu 90°C erhöht. Das am Ende der Kaskade austretende Produkt stellt die fertige Mikrokapseldispersion dar. Wird die Reifung in einzelnen Kesseln durchgeführt, so ist eine ausreichende und dem Durchsatz angepasste Anzahl von Kesseln bereitzustellen, so dass der erste Kessel bereits wieder entleert ist, wenn die Füllung des letzten Kessels beendet ist ("Swing-Verfahren"). Die Beheizung der einzelnen Kessel kann zweckmäßigerweise - wie beim Kaskadenverfahren - durch das kontrollierte Einspeisen von Niederdruckdampf direkt in das Produkt erfolgen. Auch hierbei entspricht die verfahrenstechnische Durchführung insofern dem Stand der Technik.

Die Erfindung betrifft weiterhin kohlefreie Durchschreibepapiere, die die erfindungsgemäßen Mikrokapseln enthalten, worin ein Farbgeber eingekapselt ist.

Diese Durchschreibepapiere können die Mikrokapseln nur auf einer Seite enthalten. Gegebenenfalls ist die andere Seite des Durchschreibepapiers mit einem Entwickler beschichtet (CFB-Papier).

Bevorzugt enthalten die Durchschreibepapiere auf einer Seite sowohl die erfindungsgemäßen Mikrokapseln als auch den Entwickler (SC-Papier).

Die Erfindung betrifft weiterhin ein Set von mit den erfindungsgemäßen Mikrokapseln beschichteten Durchschreibepapiere. Dieses Set ist vorzugsweise dadurch gekennzeichnet, dass es aus einem obenliegenden Deckblatt, bis zu 10 darunterliegenden Zwischenblättern und einem darunterliegenden Unterblatt schichtförmig aufgebaut ist, wobei die Rückseite des Deckblatts (Original) mit den erfindungsgemäßen Mikrokapseln beschichtet ist, die Zwischenblätter auf der Vorderseite mit einem Entwickler und auf der Rückseite mit den erfindungsgemäßen Mikrokapseln beschichtet sind, und das Unterblatt auf der Vorderseite mit Entwickler beschichtet ist, wobei die einzelnen Blätter so angeordnet sind, dass jeweils die Entwickler beschichtete Seite an die mit Mikrokapseln beschichteten Seite angrenzt, so dass beim Beschreiben oder Bedrucken des Deckblattes (Original) die Mikrokapseln der darunterliegenden Blätter zerdrückt werden, den Farbgeber freigeben und mit dem Entwickler der anpressenden Seite ein farbiges Abbild des Deckblattes ergeben.

Bevorzugt sind bis zu 7, insbesondere bis zu 4 Zwischenblätter im Set.

Als Entwickler sind beispielsweise solche vom Clay-Typ, Phenolharz-Typ bzw. Zinksalizylat-Typ bevorzugt.

Die erfindungsgemäßen Mikrokapseln haben neben vergleichbaren Gebrauchseigenschaften zu Mikrokapseln, die entweder nur mit Guanidinverbindungen oder nur mit Aminen hergestellt wurden, den überraschenden Vorteil einer deutlich verbesserten Dichtigkeit neben verbesserter Alterungsstabilität der daraus hergestellten SC-Papiere.

## <u>Beispiele</u>

### Prüfmethoden

1. Dichtigkeitsprüfung

Die Dichtigkeit der Kapseln wird wie folgt bestimmt:

a) Ansetzen einer Streichmasse bestehend aus

- 10,00 g wässrige Mikrokapseldispersion enthaltend 50 Gew.-% erfindungsgemäße Mikrokapseln
- 25,50 g deionisiertem Wasser
- 33,25 g Kieselsol

b) Beschichtung eines Rohpapieres
c) Trocknung des beschichteten Papieres

d) Remissionsmessungen an unbeschichtetem und beschichtetem Papier

Durchführung:

- Ein 47g/m$^2$ Rohpapier von DIN A4 Format wird mit Klebestreifen auf eine 30x30 cm große Kunststoffplatte fixiert.
- Die Hälfte des Papieres wird auf einem Laborcoater mit einer 30 $\mu$m Rakel mit ca. 5 ml obengenannter Streichmasse beschichtet und in Strichrichtung von einem Heißluftgebläse getrocknet.

a) Sofort nach dem Trocknen und
b) nach 2-stündigem Klimatisieren bei 70°C und 75% rel. Luftfeuchtigkeit wird die Remission des unbeschichteten sowie des beschichteten Papieres am Elrepho-Gerät gemessen.

Die Intensitäten der Verfärbungen in % werden wie folgt berechnet:

$$\frac{\text{(Remissionswert von unbeschichtetem Papier – Remissionswert von beschichtetem Papier)}}{\text{Remissionswert von unbeschichtetem Papier}} \times 100\%$$

Je geringer die Verfärbungen der Beschichtungen (= geringe Intensitätswerte), umso höher ist die Dichtigkeit der Kapsel.
Angabe des Resultates: Intensität der Verfärbung in %

2. Bestimmung der SC-Stabilität (SC = "self contained")

a) Herstellung des SC Papieres:

- Ansetzen der Streichmasse bestehend aus
  - 65 g wässriger Kapseldispersion enthaltend 50 Gew.-% der erfindungsgemäßen Mikrokapseln
  - 103,7 g Wasser
  - 16 g Phenolharz 55 %ig in Wasser (z.B. Schenectady HRJ 4002)
  - 12,8 g Cellulose-Abstandshalter (z.B. Arbocell® BE 600/30)
  - 12,5 g SBR Latex (z.B. BAYSTAL® P 1600)
- Beschichtung eines Rohpapieres
- Trocknung des beschichteten Papieres

b) Temperaturbehandlungen der SC-Papiere
c) Remissionsmessungen an unbehandelten und behandelten SC-Papieren

Durchführung:

- Ein 47g/m$^2$ Rohpapier von DIN A4 Format wird mit Klebestreifen auf einer 30 x 30 cm großen Kunststoffplatte fixiert.
- Das Papier beschichtet man auf einem Laborcoater mit einer 40 $\mu$m Rakel mit entsprechender Streichmasse.
- Ein Beschichtungsgewicht von 6 bis 7 g/m$^2$ ist anzustreben.
- Es wird in Strichrichtung von einem Heißluftgebläse getrocknet.
- Man schneidet ausgekühlte Papiere in ca. 5 cm breite Streifen und unterwirft sie folgender Behandlung:
  - 2 h bei 120 °C im Umlufttrockenschrank
  - 4 h bei 120 °C im Umlufttrockenschrank

Auswertung:

Remissionsmessungen der Verfärbung der SC-Schicht mittels Elrepho-Gerätes (Fotometer). Die Intensitäten der Verfärbungen in % werden gemessen, wobei geringer
Intensitätswert = geringe Verfärbung ist.

**Beispiel 1** (Biuret, nicht erfindungsgemäß)

Herstellung einer Mikrokapseldispersion

Für die Herstellung von Mikrokapseln zum Einsatz auf dem Gebiet kohlefreier Durchschreibepapiere wurde zunächst eine Ölphase zubereitet, indem 28,2 g eines Farbgebergemisches bestehend aus
65 % Pergascript® Schwarz I-R, 5 % Pergascript® Blau SRB, 10 % Pergascript® Blau CVL, 5 % Pergascript® Orange I-G, 15 % Pergascript® Grün I-2GN (Pulver) bei 120°C in 309,3 g Diisopropylnaphthalin (KMC® 113 von Rüttgers Kureha Solvents GmbH) gelöst und diese Lösung bei Raumtemperatur mit 30 g Biuret-Polyisocyanat, NCO-Gehalt 23,4 Gew.-%, Biuretanteil über 70 Gew.-% (BAYMICRON® OXA WM 22; Bayer AG) versetzt wurden. Dazu wurden 132,5 g naphthenisches Isoparaffin-Gemisch (Gravex® 913; Deutsche Shell AG) als Verschnittmittel gegeben. Diese Ölphase wurde mit 442,3 g einer Wasserphase, bestehend aus einer wässrigen Polyvinylalkohollösung (5,3 g Airvol® 532, Air Products in 437 g Wasser) zusammengebracht, durch Rühren eine grobe Voremulsion hergestellt und durch 8-minütiges Emulgieren mit einer Mischsirene (8 950 U/min) eine Feinemulsion erhalten. Die erhaltene Feinemulsion wurde bei Raumtemperatur mit einer wässrigen Lösung aus 2,9 g Diethylentriamin plus 3,8 g Guanidincarbonat in 52 g deionisiertem Wasser versetzt, das entstandene Gemisch innerhalb von 1 Stunde unter Rühren auf 60°C erwärmt und 3 Stunden bei dieser Temperatur nachgerührt. Es bildete sich eine ca. 51,2 %ige Mikrokapsel-Dispersion, deren Mikrokapseln eine durchschnittliche Größe von 6,8 µm aufwiesen. Die getesteten Gebrauchseigenschaften sind der Tabelle zu entnehmen.

**Beispiel 2** (Biuret, nicht erfindungsgemäß)

Es wurde analog zu Beispiel 1 verfahren, wobei jedoch ein anderes Verhältnis von Amin und Guanidinverbindung im Vernetzergemisch gewählt wurde. Als Vernetzerlösung wurde 0,6 g Diethylentriamin und 6,8 g Guanidincarbonat in 51 g deionisiertem Wasser gewählt. Die getesteten Gebrauchseigenschaften sind der Tabelle zu entnehmen.

**Beispiel 3** (Biuret, Vergleich, Vernetzer: nur Amin)

Es wurde analog zu Beispiel 1 verfahren, wobei jedoch die Vernetzerlösung lediglich aus 5,73 g Diethylentriamin in 52 g deionisiertem Wasser bestand. Die gemessenen Gebrauchseigenschaften sind der Tabelle zu entnehmen.

**Beispiel 4** (Biuret, Vergleich, Vernetzer: nur Guanidinverbindung) .

Es wurde analog zu Beispiel 1 verfahren, wobei jedoch die Vernetzerlösung lediglich aus 7,52 g Guanidincarbonat in 50 g deionisiertem Wasser bestand. Die gemessenen Gebrauchseigenschaften sind der Tabelle zu entnehmen.

**Beispiel 5** (Uretdion, erfindungsgemäß)

Es wurde analog zu Beispiel 1 verfahren, wobei jedoch als Farbgeber-Lösung 20 g Kristallviolettlacton® in 440 g Diisopropylnaphthalin (KMC®-113) eingesetzt wurde. Anstelle des Biuret-haltigen Polyisocyanats wurde ein Polyisocyanat mit über 60 % Uretdionanteil und einem NCO-Gehalt von 22,5 Gew.-% (BAYMICRON® OXA WM 33 von Bayer AG) eingesetzt.

Gegenüber Beispiel 1 wurde jedoch kein naphthenisches Isoparaffin-Gemisch als Verschnittmittel eingesetzt.

Als Vernetzerlösung kam eine Mischung aus 1,5 g Diethylentriamin und 7,7 g Guanidincarbonat in 50 g deionisiertem Wasser zum Einsatz. Gebrauchseigenschaften vgl. Tabelle.

**Beispiel 6** (Uretdion, Vergleich, Vernetzer: nur Amin)

Analog Beispiel 5 wurde verfahren, wobei jedoch eine wässrige Aminlösung aus 7,4 g Diethylentriamin in 50 g deionisiertem Wasser als Vernetzerlösung zum Einsatz kam. Gebrauchseigenschaften siehe Tabelle.

**Beispiel 7** (Uretdion, Vergleich, Vernetzer: Guanidinverbindung)

Analog zu Beispiel 5 wurde gearbeitet, wobei jedoch als Vernetzerlösung eine Lösung von 9,65 g Guanidincarbonat in 49 g deionisiertem Wasser eingesetzt wurde. Die Eigenschaften sind in der Tabelle zusammenstellt.

**Beispiel 8** (Isocanurat, nicht erfindungsgemäß)

Es wurde analog zu Beispiel 1 verfahren, wobei jedoch als Farbgeberlösung 20 g Kristallviolettlacton® in 405 g eines alkylierten Biphenyls (Suresol® 290 Koch Chemicals) verwendet wurde. Als Verschnittmittel wurden anstelle von Gravex® 913 45 g eines Naphthens (Nytex® 800) eingesetzt. Anstelle des Biuret-haltigen Polyisocyanat wurde Isocyanurathaltiges Polyisocyanat mit einem NCO-Gehalt von 21,8 Gew.-% und einem Gehalt an Isocyanurat von über 80 %, bezogen auf Polyisocyanat (BAYMICRON® OXA WM 111, Bayer AG), eingesetzt.

Als Vernetzer wurde eine Mischung aus 0,54 g Diethylentriamin und 6,3 g Guanidincarbonat in 51,2 g deionisiertem Wasser eingesetzt. Die Eigenschaften sind der Tabelle zu entnehmen.

**Beispiel 9** (Isocyanurat, Vergleich, Vernetzer: Amin)

Analog Beispiel 8 wurde verfahren, wobei jedoch als Vernetzer 5,4 g Diethylentriamin in 52,6 g deionisiertem Wasser eingesetzt wird.

**Beispiel 10** (Isocyanurat, Vergleich, Vernetzer: nur Guanidinverbindung)

Analog Beispiel 8 wurde verfahren, wobei jedoch als Vernetzer 7,0 g Guanidincarbonat in 51 g Wasser eingesetzt wird.

## Tabelle: Auswertung der Beispiele 1 bis 10

| Bei-spiel | Beispiel-Typ | Isocyanat-Typ | Vernetzer-Typ ***) | Feststoff-gehalt % | mittlere Kap-selgröße µm | Dichtigkeit ****) | | Verfärbung der SC-Schicht ****) | |
|---|---|---|---|---|---|---|---|---|---|
| | | | | | | sofort | 2 h 70°C/75% rel. Luftfeucht. | 2 h 120°C | 4 h 120°C |
| 1 | nicht erfindungsgemäß | Biuret | DETA/GUCA 43 : 57 | 51,2 | 6,8 | 1,9 | 7,5 | 15,3 | 20,0 |
| 2 | nicht erfindungsgemäß | Biuret | DETA/GUCA 8 : 92 | 50,9 | 6,7 | 1,4 | 8,0 | 12,9 | 18,3 |
| 3 | Vergleich | Biuret | DETA *) | 51,1 | 6,8 | Beschichtung wegen Agglomeration nicht möglich | | | |
| 4 | Vergleich | Biuret | GUCA **) | 50,8 | 7,0 | 1,9 | 8,0 | 20,0 | 24,2 |
| 5 | erfindungsgemäß | Uretdion | DETA/GUCA 16 : 84 | 52,0 | 5,9 | 1,8 | 6,5 | 10,9 | 14,4 |
| 6 | Vergleich | Uretdion | DETA | 52,2 | 5,5 | Beschichtung wegen Agglomeration nicht möglich | | | |
| 7 | Vergleich | Uretdion | GUCA | 52,2 | 5,9 | 1,9 | 9,7 | 18,2 | 28,0 |
| 8 | nicht erfindungsgemäß | Isocyanurat | DETA/GUCA 7,8 : 92,2 | 51,5 | 6,5 | 0,9 | 10,6 | 22,8 | 28,7 |
| 9 | Vergleich | Isocyanurat | DETA | 51,9 | 6,3 | Beschichtung wegen Agglomeration nicht möglich | | | |
| 10 | Vergleich | Isocyanurat | GUCA | 50,9 | 6,6 | 2,0 | 12,5 | 28,6 | 35,4 |

*) DETA = Diethylentriamin
**) GUCA = Guanidincarbonat
***) Bei Mischungen wird Gewichtsverhältnis der Vernetzerkomponenten angegeben
****) Je kleiner der Zahlenwert, desto besser die Dichtigkeit bzw. um so höher die Stabilität

## Patentansprüche

1. Mikrokapseln, deren Wände aus Umsetzungsprodukten von Polyisocyanaten mit Guanidinverbindungen und Aminen bestehen oder solche Umsetzungsprodukte enthalten, **dadurch gekennzeichnet, dass** als Polyisocyanate Uretdiongruppen aufweisende Polyisocyanate enthaltend mindestens 70, vorzugsweise mindestens 75 Gew.-% des eingesetzten Isocyanats ausmachen der Formel 11

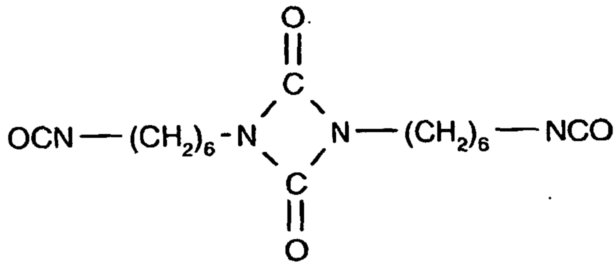

(II)

und höchstens bis zu 30, vorzugsweise höchstens bis zu 25 Gew.-%, auch Verbindungen der Formel

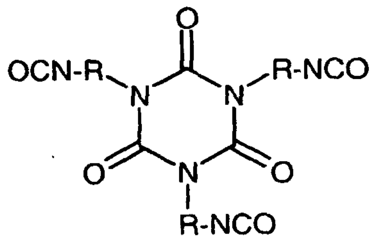

mit R = $(CH_2)_6$
und/oder der Verbindung der Formel (III)

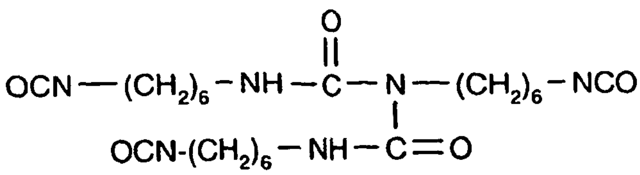

(III)

eingesetzt werden.

2. Mikrokapseln nach Anspruch 1, **dadurch gekennzeichnet, dass** es sich bei den Guanidinverbindungen um solche der Formel (I) handelt
in der

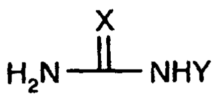

(I),

X

für HN=, 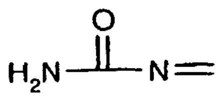 oder 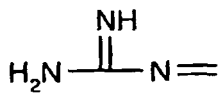

und

Y

für $H-$, $NC-$, $H_2N-$, $HO-$,

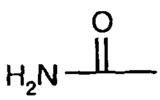 oder 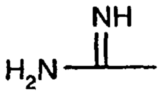

stehen oder deren Salze mit Säuren.

3. Mikrokapseln nach Anspruch 1, **dadurch gekennzeichnet, dass** es sich bei den Guanidinverbindungen um Salze des Guanidins von Kohlensäure, Salpetersäure, Schwefelsäure, Salzsäure, Kieselsäure, Phosphorsäure, Ameisensäure und/oder Essigsäure handelt.

4. Mikrokapseln nach Anspruch 1, **dadurch gekennzeichnet, dass** als Guanidinverbindung Guanidincarbonat verwendet wird.

5. Mikrokapseln nach Anspruch 1, **dadurch gekennzeichnet, dass** als Polyisocyanate aliphatische Isocyanate mit einem freie Isocyanatgruppen aufweisenden Isocyanuratanteil von wenigstens 30 Gew.-% eingesetzt werden.

6. Mikrokapseln nach Anspruch 1, **dadurch gekennzeichnet, dass** als. Polyisocyanate Hexamethylendiisocyanatderivate davon eingesetzt werden.

7. Mikrokapseln nach Anspruch 1, **dadurch gekennzeichnet, dass** als Amine aliphatische und/oder cycloaliphatische Amine eingesetzt werden, die wenigstens 2 primäre und/oder sekundäre Aminogruppen besitzen.

8. Mikrokapseln gemäß Anspruch 4, **dadurch gekennzeichnet, dass** die Guanidinverbindung und ein aliphatisches und/oder cycloaliphatisches Amin eingesetzt werden, wobei der Anteil der Guanidinverbindung, insbesondere Guanidincarbonat, wenigstens 50 Mol-%, bezogen auf die Summe beider Komponenten, ausmacht.

9. Verfahren zur Herstellung der Mikrokapseln gemäß Anspruch 1, **dadurch gekennzeichnet, dass** man

   a) eine Ölphase aus Polyisocyanaten, wenigstens einem gegenüber Isocyanaten inerten, mit Wasser nicht-mischbaren Lösungsmittel, wenigstens eine einzukapselnde Verbindung und gegebenenfalls weitere Zusätze und
   b) eine Wasserphase aus Wasser, Stabilisator und gegebenenfalls weiteren Hilfsstoffen,

   in eine Emulsion überführt, und dazu Guanidinverbindungen und Amine als Vernetzer gibt.

10. Kohlefreie Durchschreibepapiere, die Mikrokapseln gemäß Anspruch 1 enthalten, wobei ein Farbgeber eingekapselt ist.

## Claims

1. Microcapsules whose walls consist of or contain reaction products of polyisocyanates with guanidine compounds and amines, **characterized in that**, as polyisocyanates, polyisocyanates comprising uretidione groups and comprising at least 70%, preferably at least 75%, by weight of the isocyanate used, of the formula II

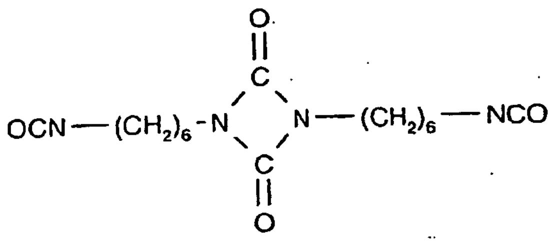

(II)

and also not more than 30%, preferably not more that 25%, by weight of compounds of the formula

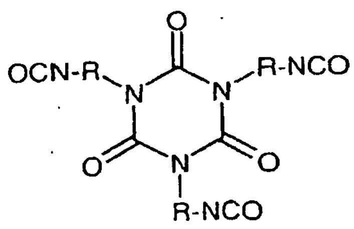

where R = $(CH_2)_6$
and/or of the compound of the formula (III)

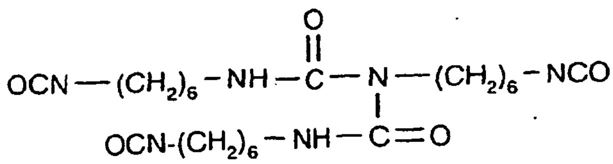

(III)

are used.

2. Microcapsules according to Claim 1, **characterized in that** the guanidine compounds are guanidine compounds of the formula (I)
where

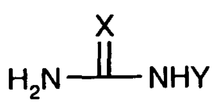

(I),

X is

HN=, 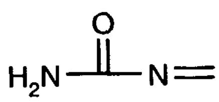 or 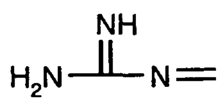

and
Y is

H—, NC—, $H_2N$—, HO—,

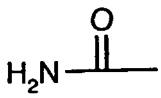 or 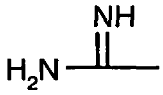

or their salts with acids.

3. Microcapsules according to Claim 1, **characterized in that** the guanidine compounds are salts of guanidine with carbonic acid, nitric acid, sulphuric acid, hydrochloric acid, silicic acid, phosphoric acid, formic acid and/or acetic acid.

4. Microcapsules according to Claim 1, **characterized in that** the guanidine compound used is guanidine carbonate.

5. Microcapsules according to Claim 1, **characterized in that** the polyisocyanates used are aliphatic isocyanates comprising at least 30% by weight of isocyanurate having free isocyanate groups.

6. Microcapsules according to Claim 1, **characterized in that** the polyisocyanates used are hexamethylene diisocyanate derivatives thereof.

7. Microcapsules according to Claim 1, **characterized in that** the amines used are aliphatic and/or cycloaliphatic amines possessing at least 2 primary and/or secondary amino groups.

8. Microcapsules according to Claim 4, **characterized in that** the guanidine compound and an aliphatic and/or cycloaliphatic amine are used in a proportion such that the guanidine compound, especially guanidine carbonate, comprises at least 50 mol%, based on the sum total of the two components.

9. Process for producing the microcapsules according to Claim 1, **characterized in that**

   a) an oil phase comprising polyisocyanates, at least one isocyanate-inert water-immiscible solvent, at least one compound to be encapsulated and optionally further additives and
   b) a water phase comprising water, stabilizer and optionally further auxiliaries,

   are converted into an emulsion, and guanidine compounds and amines are added thereto as crosslinkers.

10. Carbonless copy papers comprising microcapsules according to Claim 1 encapsulating a colour former.

## Revendications

1. Microcapsules dont les parois sont constituées par des produits de transformation de polyisocyanates avec des composés de guanidine et des amines ou contiennent ces produits de transformation, **caractérisées en ce qu'**on utilise comme polyisocyanates des polyisocyanates présentant des groupes urethdione contenant, en une proportion d'au moins 70, de préférence d'au moins 75% en poids de l'isocyanate utilisé, des isocyanates de formule II

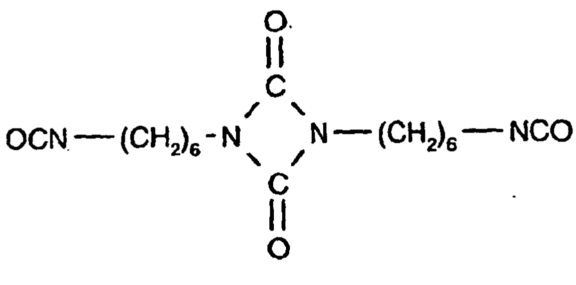

(II)

et au maximum jusqu'à 30, de préférence au maximum jusqu'à 25% en poids, également des composés de formule

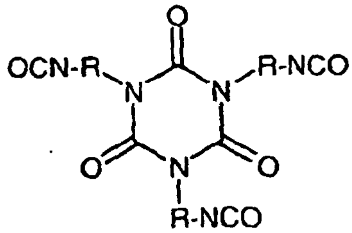

avec R = $(CH_2)_6$
et/ou le composé de formule (III)

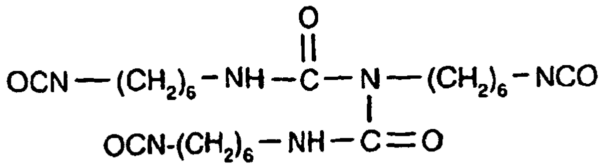

(III)

2. Microcapsules selon la revendication 1, **caractérisées en ce qu'**il s'agit, pour les composés de guanidine, de composés de formule (I)

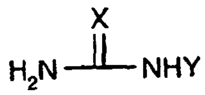

(I),

dans laquelle
X représente HN=,

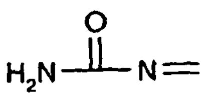

ou

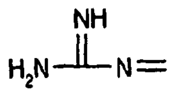

et

Y représente H-, NC-, $H_2N$-, HO-,

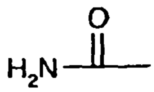

ou

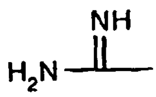

ou leurs sels avec des acides.

3. Microcapsules selon la revendication 1, **caractérisées en ce qu'**il s'agit, pour les composés de guanidine, de sels de guanidine de l'acide carbonique, nitrique, sulfurique, chlorhydrique, silicique, phosphorique, formique et/ou acétique.

4. Microcapsules selon la revendication 1, **caractérisées en ce qu'**on utilise comme composé de guanidine, le carbonate de guanidine.

5. Microcapsules selon la revendication 1, **caractérisées en ce qu'**on utilise, comme polyisocyanates, des isocyanates aliphatiques, comprenant une proportion d'isocyanurate présentant des groupes isocyanate libres d'au moins 30% en poids.

6. Microcapsules selon la revendication 1, **caractérisées en ce qu'**on utilise comme polyisocyanates des polyisocyanates de dérivés d'hexaméthylènediisocyanate.

7. Microcapsules selon la revendication 1, **caractérisées en ce qu'**on utilise comme amines des amines aliphatiques et/ou cycloaliphatiques, qui présentent au moins 2 groupes amino primaires et/ou secondaires.

8. Microcapsules selon la revendication 4, **caractérisées en ce qu'**on utilise un composé de guanidine et une amine aliphatique et/ou cycloaliphatique, la proportion du composé de guanidine, en particulier le carbonate de guanidine, représentant au moins 50% en mole, par rapport à la somme des deux composants.

9. Procédé pour la préparation des microcapsules selon la revendication 1, **caractérisé en ce qu'**on transforme

   a) une phase huileuse constituée par des polyisocyanates, au moins un solvant inerte par rapport aux isocyanates, non miscible à l'eau, au moins un composé à encapsuler et le cas échéant d'autres additifs et
   b) une phase aqueuse, constituée par de l'eau, un stabilisateur et le cas échéant d'autres adjuvants, en une émulsion et on y ajoute des composés de guanidine et des amines comme réticulants.

10. Papiers autocopiants exempts de carbone, qui contiennent des microcapsules selon la revendication 1, un colorant étant encapsulé.